# EUROPEAN PATENT SPECIFICATION

(11) **EP 1 772 941 B1**
(45) Date of publication and mention of the grant of the patent: **13.08.2008**
(21) Application number: 05425706.8
(22) Date of filing: 10.10.2005
(51) Int. Cl.: H02J 7/00

(54) **Motor vehicle electrical supply system**
Elektrisches Versorgungssystem eines Kraftfahrzeugs
Système d'alimentation électrique destiné à un véhicule à moteur

(43) Date of publication of application: 11.04.2007
(73) Proprietor: C.R.F. Società Consortile per Azioni, 10043 - Orbassano (Torino) (IT)
(72) Inventor: Casellato, Giancarlo, 10043 Orbassano (Torino) (IT)
(74) Representative: Quinterno, Giuseppe

(56) References cited:
- US-A- 4 127 782
- US-A- 5 977 652
- US-B1- 6 232 674

## Description

The present invention relates to a system for the supply of electrical energy to electrical/electronic user devices installed in a motor vehicle of the kind defined in the preamble of claim 1.

US-A-4 127 782 discloses similar two-battery systems wherein the starter motor supply is separated from the general load supply to prevent that upon starting large voltage drops may interfere with the operation of the general load.

In conventional motor vehicles that are currently in production, the electrical energy required for the on-board electrical/electronic devices is produced by a generator (typically an alternator) driven by the motor vehicle's engine, and is then stored and supplied by (at least) one storage battery and is absorbed by the various on-board user devices or loads in operation.

Naturally, the amount of energy that can be generated on board a motor vehicle is limited and depends on the rate of rotation of the motor-vehicle's engine.

In operation, various conditions may arise in which the amount of energy generated on board is less than the amount of energy that is required by the user devices; in such situations, the "lacking" amount of energy is obtained from the storage battery, the charge of which is correspondingly reduced. If the storage battery is completely discharged, all of the on-board systems cease to operate.

Such a condition is not generally dangerous in a conventional motor vehicle without "drive-by-wire" systems, in particular without "by-wire" steering and braking systems.

In the above-mentioned conventional motor vehicles, the capacity of the electrical-energy storage system (the battery) is selected on the basis of conventional electrical-balance analysis methods which relate to predefined standard operating cycles and which aim to reduce greatly the probability of situations occurring in practice, in which the motor-vehicle is not available due to a deficit of electrical energy.

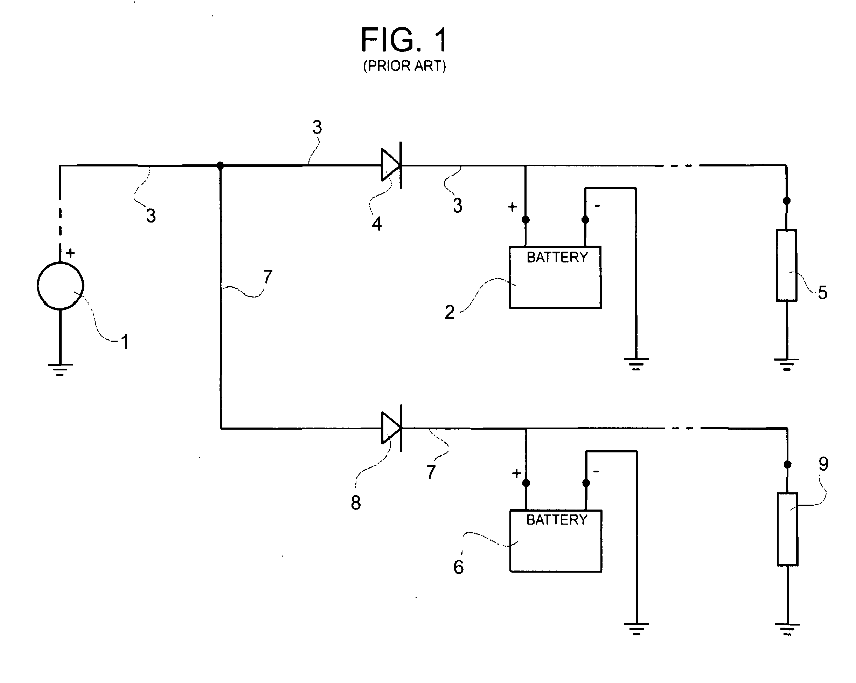

In motor vehicles with by-wire steering and/or by-wire braking systems, a lack of electrical energy is liable to lead to failure of the control and electrically-operated systems, which has a very great impact on safety. In such vehicles, the increase in the demand for electrical energy due to the introduction of by-wire systems renders the on-board electrical balance even more critical because the capacity of the on-board generator cannot be increased indiscriminately at will. In vehicles with by-wire steering and braking, a selection of the capacity of the energy system based on conventional methods does not ensure that there will not be situations in which the electrical balance becomes negative for sufficient time to put the system in crisis. In these vehicles, the use of electrical-energy supply systems with apparently separate architectures such as that shown schematically in Figure 1 of the appended drawings does not ensure safety with respect to the problem outlined above.

The system according to Figure 1 comprises an electrical generator 1 (an alternator) which can be driven by the internal combustion engine (not shown) of the motor vehicle. A first storage battery, indicated 2, is connected to the generator 1 by means of an electrical power line 3 in which a diode 4 is interposed. The battery 2 is intended to be operatively connected to "normal", that is non-priority electrical/electronic user devices which are represented generally in Figure 1 by a generic load indicated 5. The normal, that is, non-priority devices or loads comprise substantially all of the on-board electrical loads with the exclusion of the electrical/electronic devices forming part of by-wire steering and/or braking systems or of other by-wire systems the functionality of which is essential for safe driving of the motor vehicle. These latter devices or loads, hereinafter defined as priority loads, are represented generally in the diagram of Figure 1 by a generic load 9 and are intended to be operatively connected to (at least) one second storage battery or auxiliary battery 6 which is connected to the electrical power line 3 by means of a branched electrical line 7 in which a diode 8 is interposed.

With the electrical-energy supply system according to Figure 1, the battery 2 for the normal loads and the battery 6 for the priority loads share the energy produced by the generator 1 to a degree which varies substantially in inverse proportion to their respective charge states. In negative energy-balance situations, both of the storage systems (the batteries 2 and 6) are discharged with the possibility that energy-fault conditions may occur, with worrying impacts on the safe handling of the motor vehicle.

An object of the present invention is to provide a system for the supply of electrical energy to electrical/electronic devices installed on board a motor vehicle, which system eliminates or at least mitigates the above-described disadvantages of systems of the prior art.

These and other objects are achieved, according to the invention, by a system having the features defined in claim 1.

The system for the supply of electrical energy according to the invention can therefore ensure the supply of energy to the priority loads (by-wire systems) in negative energy-balance conditions. These priority devices or loads can thus "survive" the occurrence of an energy black-out of the storage system associated with the "normal" loads, at least for some time.

Further characteristics and advantages of the invention will become clear from the following detailed description which is given purely by way of non-limiting example, with reference to the appended drawings, in which:
Figure 1, which has already been described, is a diagram of an on-board electrical-energy supply system of a motor vehicle of the prior art;
Figure 2 is an electrical diagram of an on-board electrical-energy supply system of a motor vehicle according to the present invention; and
Figure 3 is a partial electrical diagram which shows an embodiment of a portion of the system according to Figure 2.

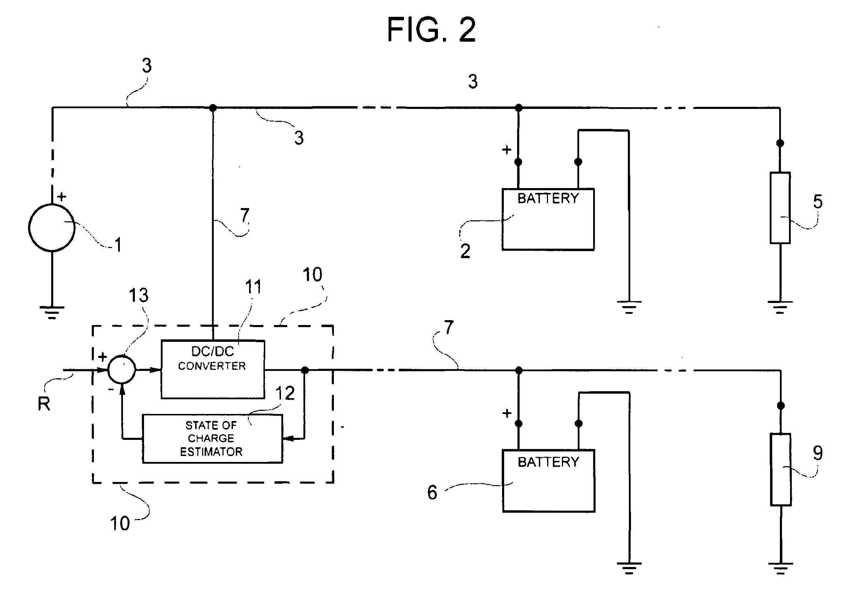

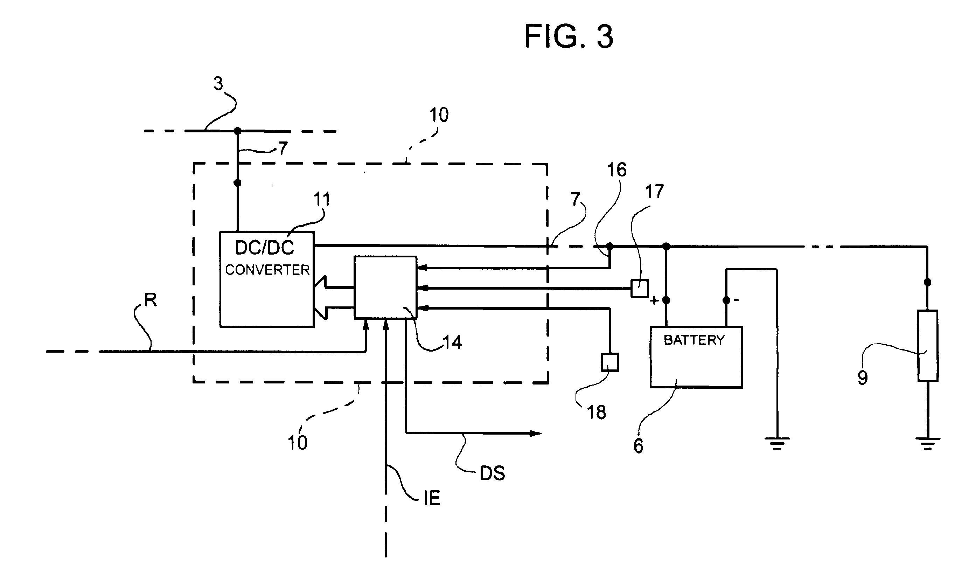

In Figures 2 and 3, parts which are identical or substantially equivalent to parts that have already been described with reference to Figure 1 have again been attributed the same reference numerals as were used above.

The system for the supply of electrical energy according to the invention which is shown in the diagram of Figure 2 thus comprises a generator 1 (an alternator) which is driven operatively by the internal combustion engine (not shown) of the motor vehicle. The generator 1 is connected, by means of an electrical power line 3, to the battery 2 associated with the normal (non-priority) user devices or loads 5.

A branch line 7 branches from the electrical power line 3 to supply electrical energy to the battery 6 which is associated with the priority electrical/electronic user devices (loads) 9.

A control unit, generally indicated 10 in Figures 2 and 3, is interposed in the electrical line 7.

This unit comprises a controlled unidirectional dc/dc converter 11 of which the input is connected to the electrical power line 3 and the output is connected to the auxiliary battery 6. In operation, the converter 11 permits a flow of energy from the generator 1 to the auxiliary battery 6 through the line 7 but not in the opposite direction.

An electronic control system is associated with the dc/dc converter 11. According to the diagram of Figure 2, the control system comprises an estimator 12 which is arranged to estimate the charge state of the auxiliary battery 6 in accordance with predetermined procedures, for example, on the basis of the information represented by the voltage of the battery and optionally also of the current delivered in operation and, again optionally, also in dependence on the battery temperature. The estimator 12 provides output signals or data that are representative of the estimated charge state of the auxiliary battery 6 to an algebraic adder 13. The adder receives, at a further input, reference signals or data R that are indicative of a charge state of the auxiliary battery 6 which the control unit 10 as a whole should tend to keep substantially constant. The device 13 drives the dc/dc converter 11 in dependence on the "error", that is, on the difference between the reference R and the estimated charge state of the auxiliary battery 6 in a manner such as correspondingly to regulate the flow of energy from the generator 1 to the battery 6 so as to tend to keep the charge state of that battery at the desired reference value.

The control system associated with the dc/dc converter 11 is therefore such as to modulate its power, that is, the energy flow per unit of time, in order to keep the charge state of the auxiliary battery 6 at the desired value. The regulation or modulation may be continuous, that is, substantially proportional to the "error" between the reference R and the estimated charge state, or may be of the ON/OFF type.

The estimator 12 may be formed with the use of extremely simple algorithms based substantially on the reading of the voltage of the auxiliary battery 6, or by very sophisticated algorithms which can estimate the charge state of the battery in accordance with a plurality of operative parameters.

With reference to Figure 3, in one implementation, the estimator 12 and the algebraic adder 13 are formed functionally by a single circuit device 14 which is arranged to drive the dc/dc converter 11 and, in particular, to modulate its power. The circuit device 14 receives the reference R. The circuit device may also receive information and/or enabling signals or data IE from an electronic unit of a control system of the vehicle (not shown).

The device 14 is also advantageously arranged to emit diagnosis signals DS, for example, for the control system of the vehicle, to indicate the occurrence of fault events such as a permanent breakdown of one of the components with consequent loss of the recharging function of the auxiliary battery 6, or a condition in which it is impossible to reach the battery charge-state target value, for example, because of transitory high intensity phenomena or because of a lack of adequate voltage/power levels in the input electrical line 3.

The power of the dc/dc converter 11 may be modulated by the device 14 in accordance with the voltage of the auxiliary battery 6 detected, for example, by means of a connection 16, with the intensity of the current delivered by the battery 6 in operation detected, for example, by means of a suitable sensor 17 (such as a shunt resistor, a Hall-effect sensor, etc), and in accordance with the temperature of the battery 6 detected, for example, by means of a probe 18.

Naturally, the principle of the invention remaining the same, the forms of embodiment and details of construction may be varied widely with respect to those described and illustrated purely by way of non-limiting example, without thereby departing from the scope of the invention as defined in the appended claims.

## Claims

1. A system for ensuring the supply of electrical energy to electrical/electronic user devices (5, 9) installed in a motor vehicle, the system also supplying normal, non-priority electrical/electronic devices also installed in the motor vehicle, the system comprising
an electrical generator (1) arranged to be driven by the motor vehicle's engine,
a first storage battery (2) which is connected to the generator (1) by means of an electrical power line (3) and is operatively connectable to the normal user devices (5); and
a second storage battery (6) or auxiliary battery which is connected to the electrical power line (3) and is operatively connectable to the priority user devices (9);
the system being **characterized in that**
the second battery (6) is connected to the electrical power line (3) by means of
a controlled unidirectional dc/dc converter (11) arranged to permit the transfer of energy solely from the electrical line (3) to the second battery (6), and with which is associated
an electronic control system (12, 13; 14) which is arranged
to estimate the charge state of the second battery (6) in accordance with predetermined procedures, and
to control the dc/dc converter (11) in a manner such as to regulate the supply of electrical energy from the power line (3) to the second battery (6) so that the estimated charge state of the second battery (6) tends towards a predetermined reference value (R).

2. A system according to Claim 1 in which the control system (12, 13; 14) is arranged to regulate the operation of the dc/dc converter (11) continuously in accordance with the difference or error between the reference value (R) and the estimated charge state of the second battery (6).

3. A system according to Claim 1 in which the control system (12, 13; 14) is arranged to regulate the operation of the dc/dc converter (11) in an on-off manner in accordance with the difference or error between the reference value (R) and the estimated charge state of the second battery (6).

4. A system according to any one of the preceding claims in which the control system (12, 13; 14) is arranged to estimate the charge state of the second battery (6) in accordance with the voltage of the second battery (6).

5. A system according to Claim 4 in which the control system (12, 13; 14) is arranged to estimate the charge state of the second battery (6) also in accordance with the intensity of the current delivered by the second battery (6).

6. A system according to Claim 4 or claim 5 in which the control system (12, 13; 14) is arranged to estimate the charge state of the second battery (6) also in accordance with the working temperature of the second battery (6).

## Patentansprüche

1. System zum Sicherstellen der Versorgung mit elektrischer Energie für elektrische/elektronische Nutzergeräte (5, 9), die in einem Kraftfahrzeug installiert sind, wobei das System außerdem normale, nachrangige elektrische/elektronische Geräte versorgt, die ebenso in dem Fahrzeug installiert sind, und das System umfasst:
einen elektrischen Generator (1), eingerichtet, um durch den Motor der Maschine des Fahrzeugs angetrieben zu werden,
einen ersten Akkumulator (2), der mit Hilfe einer elektrischen Stromleitung (3) mit dem Generator (1) verbunden ist und wirksam mit den normalen Nutzergeräten (5) verbunden werden kann, und
einen zweiten Akkumulator (6) oder Hilfsakkumulator, der mit der elektrischen Stromleitung (3) verbunden ist und wirksam mit den vorrangigen Nutzergeräten (9) verbunden werden kann,
wobei das System **dadurch gekennzeichnet ist, dass**
der zweite Akkumulator (6) mit der elektrischen Stromleitung (3) mit Hilfe
eines geregelten eindirektionalen DC/DC-Wandlers (11) verbunden ist, der eingerichtet ist, um die Energieübertragung ausschließlich von der elektrischen Leitung (3) zu dem zweiten Akkumulator (6) zuzulassen, mit dem
ein elektronisches Steuersystem (12, 13, 14) verbunden ist, das eingerichtet ist,
um den Ladezustand des zweiten Akkumulators (6) entsprechend vorgegebenen Prozeduren zu schätzen und
um den DC/DC-Wandler (11) auf eine solche Weise zu steuern, dass die Versorgung mit elektrischer Energie von der Stromleitung (3) zu dem zweiten Akkumulator (6) so geregelt wird, dass der geschätzte Ladezustand des zweiten Akkumulators (6) eine Tendenz zu einem vorgegebenen Referenzwert (R) aufweist.

2. System nach Anspruch 1, wobei das Steuersystem (12, 13, 14) eingerichtet ist, um den Betrieb des DC/DC-Wandlers (11) entsprechend der Differenz oder dem Fehler zwischen dem Referenzwert (R) und dem geschätzten Ladezustand des zweiten Akkumulators (6) stufenlos zu regeln.

3. System nach Anspruch 1, wobei das Steuersystem (12, 13, 14) eingerichtet ist, um den Betrieb des DC/DC-Wandlers (11) entsprechend der Differenz oder dem Fehler zwischen dem Referenzwert (R) und dem geschätzten Ladezustand des zweiten Akkumulators (6) durch EIN/AUS zu regeln.

4. System nach einem der vorhergehenden Ansprüche, wobei das Steuersystem (12, 13, 14) eingerichtet ist, um den Ladezustand des zweiten Akkumulators (6) entsprechend der Spannung des zweiten Akkumulators (6) zu schätzen.

5. System nach Anspruch 4, wobei das Steuersystem (12, 13, 14) eingerichtet ist, um den Ladezustand des zweiten Akkumulators (6) ebenso entsprechend der Stärke des durch den zweiten Akkumulator (6) gelieferten Stroms zu schätzen.

6. System nach Anspruch 4 oder Anspruch 5, wobei das Steuersystem (12, 13, 14) eingerichtet ist, um den Ladezustand des zweiten Akkumulators (6) ebenso entsprechend der Arbeitstemperatur des zweiten Akkumulators (6) zu schätzen.

## Revendications

1. Système destiné à assurer l'alimentation électrique de dispositifs utilisateur électriques/électroniques (5, 9) installés dans un véhicule à moteur, le système alimentant également des dispositifs électriques/électroniques normaux et non prioritaires également installés dans le véhicule à moteur, le système comprenant
un générateur électrique (1) agencé afin d'être entraîné par le moteur du véhicule à moteur,
une première batterie de stockage (2) qui est reliée au générateur (1) à l'aide d'une ligne d'alimentation électrique (3) et qui peut être reliée de manière opérationnelle aux dispositifs utilisateur normaux (5) ; et
une seconde batterie de stockage (6) ou une batterie auxiliaire qui est reliée à la ligne d'alimentation électrique (3) et qui peut être reliée de manière opérationnelle aux dispositifs utilisateur prioritaires (9) ;
le système étant **caractérisé en ce que**
la seconde batterie (6) est reliée à la ligne d'alimentation électrique (3) à l'aide de
un convertisseur CC/CC unidirectionnel asservi (11) agencé afin de permettre le transfert de l'énergie uniquement entre la ligne électrique (3) et la seconde batterie (6), et auquel est associé
un système de commande électronique (12, 13 ; 14) qui est agencé
afin d'estimer l'état de charge de la seconde batterie (6) selon les procédures prédéterminées, et
afin de contrôler le convertisseur CC/CC (11) de façon à réguler l'alimentation en énergie électrique entre la ligne d'alimentation (3) et la seconde batterie (6) afin que l'état de charge estimé de la seconde batterie (6) tende vers une valeur de référence prédéterminée (R).

2. Système selon la revendication 1, dans lequel le système de commande (12, 13 ; 14) est agencé afin de réguler le fonctionnement du convertisseur CC/CC (11) en continu selon la différence ou l'erreur entre la valeur de référence (R) et l'état de charge estimé de la seconde batterie (6).

3. Système selon la revendication 1, dans lequel le système de commande (12, 13 ; 14) est agencé afin de réguler le fonctionnement du convertisseur CC/CC (11) de manière ON/OFF selon la différence ou l'erreur entre la valeur de référence (R) et l'état de charge estimé de la seconde batterie (6).

4. Système selon l'une quelconque des revendications précédentes, dans lequel le système de commande (12, 13 ; 14) est agencé afin d'estimer l'état de charge de la seconde batterie (6) selon la tension de la seconde batterie (6).

5. Système selon la revendication 4, dans lequel le système de commande (12, 13 ; 14) est agencé afin d'estimer l'état de charge de la seconde batterie (6) également selon l'intensité du courant délivré par la seconde batterie (6).

6. Système selon la revendication 4 ou la revendication 5, dans lequel le système de commande (12, 13 ; 14) est agencé afin d'estimer l'état de charge de la seconde batterie (6) également selon la température de fonctionnement de la seconde batterie (6).
